# EUROPEAN PATENT APPLICATION

(11) **EP 4 557 640 A1**
(43) Date of publication of application: **21.05.2025**
(21) Application number: 24187736.4
(22) Date of filing: 10.07.2024
(51) Int. Cl.: H04J 3/06, H04L 12/40

(54) **TIME SYNCHRONIZATION METHOD AND DEVICE FOR VEHICLE**

(30) Priority: 14.11.2023 CN 202311515979
(71) Applicant: Xiaomi EV Technology Co., Ltd., 100176 Beijing (CN)
(72) Inventor: CHEN, Hao, Beijing, 100176 (CN)
(74) Representative: Zimmermann, Tankred Klaus

(57) **Abstract**

A time synchronization method executed by a central gateway includes: continuously monitoring a controller local area network message and a first clock information message both sent by a vehicle-mounted telematics device and both having clock information, in a same time period; acquiring a second clock information message at a current moment according to the monitored first clock information message or the monitored controller local area network message; and sending the second clock information message to a plurality of domain controllers to instruct the plurality of domain controllers to perform a time synchronization according to clock information of the second clock information message.

## Description

### FIELD

The present invention relates to the field of vehicles, in particular to a time synchronization method for a vehicle and a time synchronization device for a vehicle.

### BACKGROUND

In the related art, a Time Master (TM) node of an entire vehicle is a generalized Precision Time Protocol (gPTP) stack in a vehicle-mounted telematics node. However, the gPTP stack based on Time-Sensitive Networking (TSN) protocol stack runs in an operating system, and the operating system may encounter thread hangs for unknown reasons, causing the system to crash or restart, in which case the TSN protocol stack fails. How to ensure time synchronization among various domain controllers of the vehicle in case of a TSN protocol stack failure, avoiding time jumps and improving accuracy of time synchronization, has become one of the important research directions.

### SUMMARY

Embodiments of the present invention provides a time synchronization method and device for a vehicle.

Embodiments of a first aspect of the present invention provide a time synchronization method for a vehicle. The time synchronization method is executed by a central gateway and includes: continuously monitoring a controller local area network message and a first clock information message both sent by a vehicle-mounted telematics device and both having clock information, in a same time period; acquiring a second clock information message at a current moment according to the monitored first clock information message or the monitored controller local area network message; and sending the second clock information message to a plurality of domain controllers to instruct the plurality of domain controllers to perform a time synchronization according to clock information of the second clock information message.

Embodiments of a second aspect of the present invention provide a time synchronization method for a vehicle. The time synchronization method is executed by a vehicle-mounted telematics device and includes: monitoring reference clock information sent by a global navigation satellite system; in response to the reference clock information being monitored, acquiring a clock information message and/or a controller local area network message based on the reference clock information, and sending the clock information message and/or the controller local area network message to a central gateway; in response to the reference clock information being not monitored, acquiring real-time clock information, and acquiring the controller local area network message according to the real-time clock information and sending the controller local area network message to the central gateway.

Embodiments of a third aspect of the present invention provide a time synchronization device for a vehicle. The time synchronization device includes: a monitoring module configured to continuously monitoring a controller local area network message and a first clock information message both sent by a vehicle-mounted telematics device and both having clock information, in a same time period; an acquisition module configured to acquire a second clock information message at a current moment according to the monitored first clock information message or the monitored controller local area network message; and a sending module configured to send the second clock information message to a plurality of domain controllers to instruct the plurality of domain controllers to perform a time synchronization according to clock information of the second clock information message.

Embodiments of a fourth aspect of the present invention provide a time synchronization device for a vehicle. The time synchronization device includes: a monitoring module configured to monitor reference clock information sent by a global navigation satellite system; a first acquisition module configured to acquire a clock information message and/or a controller local area network message based on the reference clock information in response to the reference clock information being monitored, and send the clock information message and/or the controller local area network message to a central gateway; and a second acquisition module configured to acquire real-time clock information in response to the reference clock information being not monitored, and acquire the controller local area network message according to the real-time clock information and send the controller local area network message to the central gateway.

Embodiments of a fifth aspect of the present invention provide a chip, including: a memory for storing a program code; and a processor coupled to the memory and configured to read the program code from the memory to perform the time synchronization method according to embodiments of the first aspect or the time synchronization method according to embodiments of the second aspect.

Embodiments of a sixth aspect of the present invention provide a non-transitory computer-readable storage medium having stored therein instructions that, when executed by a processor of an electronic apparatus, causes the electronic apparatus to perform the time synchronization method according to embodiments of the first aspect or the time synchronization method according to embodiments of the second aspect.

The technical solutions according to embodiments of the present invention at least have the following beneficial effects.

In embodiments of the present invention, the second clock information message at the current moment is acquired according to the monitored first clock information message or the monitored controller local area network message, and the second clock information message is sent to the plurality of domain controllers, that is, the central gateway is used as a vehicle backup time release source to redundantly broadcast the vehicle time, which can ensure the time synchronization among the vehicle domain controllers in the case of a TSN protocol stack failure, avoid time jumps and improve the accuracy of time synchronization.

It is to be understood that both the foregoing general description and the following detailed description are merely illustrative and explanatory and are not restrictive of the present invention.

### BRIEF DESCRIPTION OF DRAWINGS

The above and/or additional aspects and advantages of the present invention will become apparent and easily understood from the following description of embodiments with reference to the accompanying drawings, in which:
Fig. 1 is a flow chart of a time synchronization method for a vehicle according to an embodiment of the present invention;
Fig. 2 is a structural diagram of a time synchronization system for a vehicle according to an embodiment of the present invention;
Fig. 3 is a flow chart of a time synchronization method for a vehicle according to an embodiment of the present invention;
Fig. 4 is a schematic diagram of a time synchronization method for a vehicle according to an embodiment of the present invention;
Fig. 5 is a flow chart of a time synchronization method for a vehicle according to an embodiment of the present invention;
Fig. 6 is a structural diagram of a vehicle-mounted telematics device according to an embodiment of the present invention;
Fig. 7 is a structural block diagram of a time synchronization device for a vehicle according to an embodiment of the present invention;
Fig. 8 is a structural block diagram of a time synchronization device for a vehicle according to an embodiment of the present invention;
Fig. 9 is an architectural block diagram of a chip according to an embodiment of the present invention;
Fig. 10 is a structural block diagram of a chip according to an embodiment of the present invention.

### DETAILED DESCRIPTION

Reference will now be made in detail to embodiments, examples of which are illustrated in the accompanying drawings. When the following description refers to the drawings, unless otherwise indicated, the same numbers in different drawings indicate the same or similar elements. Embodiments described in the following embodiments do not represent all embodiments consistent with the embodiments of the present invention. Rather, they are merely examples of device and methods consistent with some aspects of embodiments of the present invention as detailed in the appended claims.

Terms used in the embodiments of the present invention are only for the purpose of describing specific embodiments, and are not intended to limit embodiments of the present invention. The singular forms "a/an" and "the" used in embodiments of the present invention and the appended claims are also intended to include plural forms, unless clearly indicated otherwise. It should also be understood that the term "and/or" as used herein refers to and includes any or all possible combinations of one or more associated listed items.

It should be understood that although terms, such as "first," "second," and "third," may be used to describe various information in the embodiments of the present invention, these information should not be limited to these terms. These terms are only used to distinguish information of the same type from each other. For example, without departing from the scope of embodiments of the present invention, first system information may also be called second system information, and similarly, the second system information may also be called the first system information. Depending on the context, the term "if' may be construed to mean "when" or "upon" or "in response to determining".

Hereinafter, embodiments of the present invention will be described in detail, examples of which are illustrated in the accompanying drawings, wherein the same or similar reference numerals indicate the same or similar elements. The embodiments described below with reference to the drawings are illustrative and are intended to explain the present invention rather than limit the present invention.

It should be noted that a time synchronization method for a vehicle according to any embodiment of the present invention may be performed alone or in combination with possible implementations of other embodiments, or may also be performed in combination with any technical schemes in the related art.

A time synchronization method and device for a vehicle according to embodiments of the present invention will be described below with reference to the drawings.

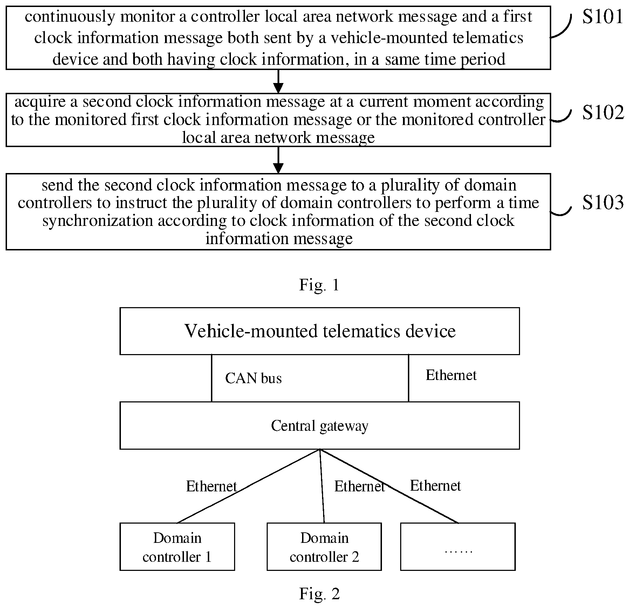

Fig. 1 is a flow chart of a time synchronization method for a vehicle according to an embodiment of the present invention. As shown in Fig. 1, the time synchronization method is executed by a central gateway and includes the following steps.

At S101, in a same time period, a controller local area network message and a first clock information message both sent by a vehicle-mounted telematics device and both having clock information are continuously monitored.

In embodiments of the present invention, the time period is calculated from the time the vehicle is powered on, and the first clock information message and the controller local area network message sent by the vehicle-mounted telematics device are monitored.

Optionally, the time period is an ignition period; optionally, the time period is a time period in which the entire vehicle is incompletely fed with power or incompletely powered off, which is not limited by the present invention.

As shown in Fig. 2, optionally, in embodiments of the present invention, the central gateway monitors the CAN message of the controller local area network sent by the vehicle-mounted telematics device based on the controller area network, and monitors the first clock information gPTP message based on Ethernet.

The gPTP message is a data packet used to transmit clock information, including various message types, such as Sync, Announce, Follow_Up, Delay_Req, Delay_Resp and Pdelay_Req. In some embodiments, after monitoring the first clock information message, the first clock information message is parsed to judge whether the message type of the first clock information message is missing. If the first clock information message is missing fields of some message types, such as the first clock information message only including fields of the Sync message type but do not including the fields of Follow_Up message type, the first clock information message is judged to be invalid and filtered.

In view of the fact that under a condition of plugging and unplugging a small battery, the vehicle-mounted telematics device may send out the first clock information message or the controller local area network message carrying the wrong clock information at an initial start-up stage, a filtering mechanism is therefore added in embodiments of the present invention to filter the first clock information message and/or the controller local area network message according to the preset time range.

In some embodiments, after the first clock information message is monitored, the first clock information message is parsed to judge whether the clock information of the first clock information message is within a preset first time range; if the first clock information message is not within the preset first time range, it is determined that the first clock information message is invalid, and the first clock information message is filtered.

In some embodiments, after the controller local area network message is monitored, the controller local area network message is parsed to judge whether the clock information of the controller local area network message is within the preset second time range, and if the controller local area network message is not within the preset second time range, it is determined that the controller local area network message is invalid, and the controller local area network message is filtered.

Optionally, the first time range and the second time range may be the same time range or different time ranges, which is not limited by embodiments of the present invention.

At S102, a second clock information message at a current moment is acquired according to the monitored first clock information message or the monitored controller local area network message.

In embodiments of the present invention, the current moment being the i^{th} moment is taken as an example, where i is an integer greater than 1.

In some embodiments, in the same time period, from the first moment to the current i^{th} moment, the central gateway does not monitor the first clock information message sent by the vehicle-mounted telematics device, but only monitors one or plural frames of controller local area network messages sent by the vehicle-mounted telematics device, and needs to use the controller local area network message as a backup clock source, that is, the second clock information message at the current i^{th} moment is acquired according to the controller local area network message.

In some embodiments, in the same time period, from the first moment to the current i^{th} moment, the central gateway monitors one or plural frames of first clock information messages sent by the vehicle-mounted telematics device, and monitors one or plural frames of controller local area network messages sent by the vehicle-mounted telematics device, and in order to avoid time jumping back and forth, the controller local area network messages are not synchronized subsequently, and the second clock information messages at the current i^{th} moment are acquired by using the first clock information messages.

At S103, the second clock information message is sent to a plurality of domain controllers to instruct the plurality of domain controllers to perform a time synchronization according to clock information of the second clock information message.

Optionally, in embodiments of the present invention, the central gateway sends the second clock information message to a plurality of domain controllers based on Ethernet, so as to perform time serving the domain controllers in the vehicle, so as to broadcast the whole vehicle time, and the second clock information message can instruct the plurality of domain controllers to perform the time synchronization according to the clock information of the second clock information message.

After sending the second clock information message at the current i^{th} moment to a plurality of domain controllers, the second clock information message at the next moment is continuously acquired, and the time is continuously released to a plurality of domain controllers of the vehicle. For the process of acquiring the second clock information message at the next moment, please refer to the relevant contents in the above embodiments, and the details are not repeated here.

In embodiments of the present invention, the second clock information message at the current i^{th} moment is acquired according to the monitored first clock information message or the controller local area network message, and the second clock information message is sent to a plurality of domain controllers, that is, the central gateway is used as a vehicle backup time release source to redundantly broadcast the vehicle time, which can ensure the time synchronization among the vehicle domain controllers when the TSN protocol stack fails, avoid time jumps and improve the accuracy of time synchronization.

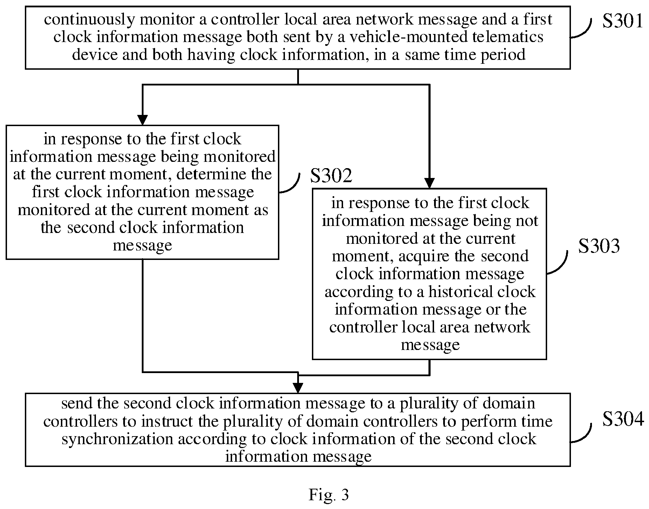

Fig. 3 is a flow chart of a time synchronization method for a vehicle according to an embodiment of the present invention. As shown in Fig. 3, the time synchronization method is executed by a central gateway and includes the following steps.

At S301, in a same time period, a controller local area network message and a first clock information message both sent by a vehicle-mounted telematics device and both having clock information are continuously monitored.

The introduction of step S301 can refer to the related contents in the above embodiments and will not be repeated here.

At S302, in response to the first clock information message being monitored at the current moment, the first clock information message monitored at the current moment is determined as the second clock information message.

If the central gateway receives the first clock information message, it will directly perform time serving according to the first clock information message, that is, the subsequent domain controllers will use gPTP for time serving.

At S303, in response to the first clock information message being not monitored at the current moment, the second clock information message is acquired according to a historical clock information message or the controller local area network message.

In embodiments of the present invention, the current moment being the i^{th} moment is taken as an example, in which the historical moment is from the first moment to the (i-1)^{th} moment in the current time period.

In embodiments of the present invention, the historical clock information message is the last frame of the first clock information message monitored at the historical moment in the current time period. For example, if a frame of the first clock information message is monitored at the historical moment in the current time period, the first clock information message is a historical clock information message; if multiple frames of the first clock information message are monitored at the historical moment in the current time period, the last frame of the first clock information message is regarded as the historical clock information message in embodiments of the present invention.

In response to the first clock information message being not monitored at the i^{th} moment, it is judged whether the historical clock information message is monitored in the current time period. If the historical clock information message has been monitored in the same time period, in order to avoid time jump, the controller local area network message is not synchronized, and the second clock information message is acquired according to the clock information in the historical clock information message and the first timing information of the system clock, and the first timing information of the system clock is the timing information acquired by the system clock starting timing after monitoring the historical clock information message. For example, the target clock information is acquired according to the sum of the clock information in the historical clock information message and the first timing information of the system clock, and the second clock information message is acquired according to the target clock information.

In some embodiments, in response to the historical clock information message being not monitored, it is judged whether the controller local area network message is monitored at the i^{th} moment, and in response to monitoring the controller local area network message at the i^{th} moment, a second clock information message is acquired according to the clock information in the controller local area network message.

In some embodiments, in response to the first clock information message or the controller local area network message being not monitored at the i^{th} moment and the historical clock information message being not monitored at the historical moment in the current time period, the second clock information message is acquired according to the historical controller local area network message and the second timing information of the system clock. For example, the target clock information is acquired according to the sum of the clock information in the historical controller local area network message and the second timing information of the system clock, and the second clock information message is acquired according to the target clock information.

The historical controller local area network message is the last frame of the controller local area network message monitored at the historical moment in the current time period, and the second timing information is the timing information acquired by the system clock starting timing after the historical controller local area network message is monitored.

At S304, the second clock information message is sent to a plurality of domain controllers to instruct the plurality of domain controllers to perform the time synchronization according to clock information of the second clock information message.

The introduction of step S304 can refer to the related contents in the above embodiments and will not be repeated here.

In embodiments of the present invention, in response to the first clock information message monitored at the i^{th} moment, the first clock information message monitored at the i^{th} moment is determined as the second clock information message, and in response to the first clock information message not monitored at the i^{th} moment, the second clock information message is acquired according to the historical clock information message or the controller local area network message. According to embodiments of the present invention, when the TSN protocol stack fails, time jumps can be avoided, and time synchronization among domain controllers of the vehicle can be ensured.

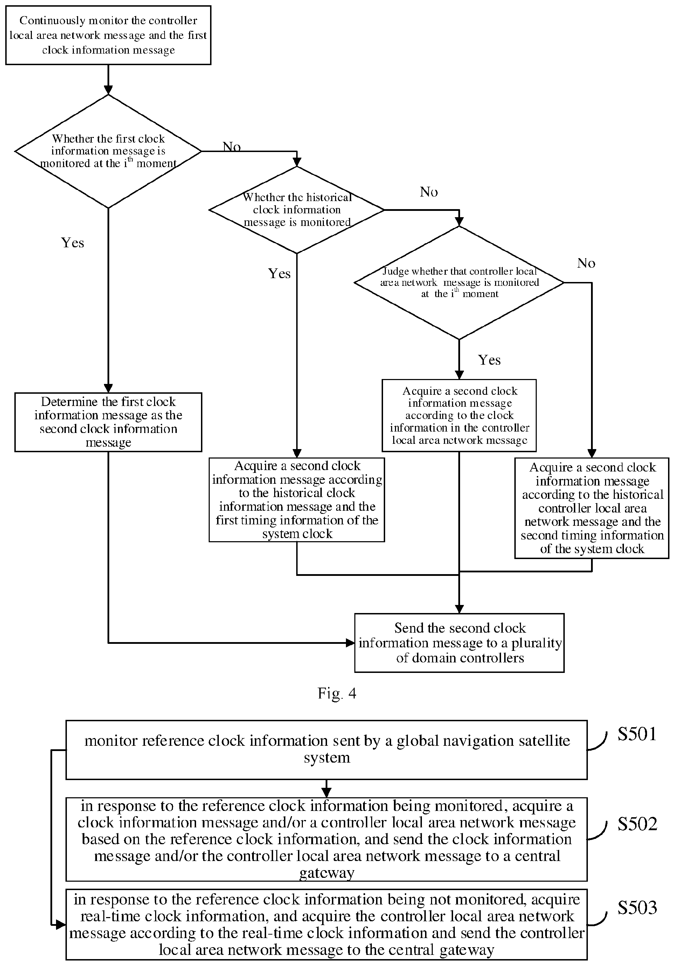

Fig. 4 is a schematic diagram of a time synchronization method for a vehicle according to an embodiment of the present invention. As shown in Fig. 4, in embodiments of the present invention, the current moment being the i^{th} moment is taken as an example. In the same time period, the first clock information message and the controller local area network message with clock information sent by the vehicle-mounted telematics device are continuously monitored, and in response to the first clock information message being monitored at the i^{th} time, the first clock information message monitored at the i^{th} time is determined as the second clock information message, and in response to the first clock information message being not monitored at the i^{th} moment, it is judged whether the historical clock information message is monitored in the current time period; and in response to monitoring the historical clock information message, the second clock information message is acquired according to the clock information in the historical clock information message and the first timing information of the system clock, and in response to the historical clock information message being not monitored, it is judge whether the controller local area network message is monitored at the i^{th} moment; and in response to monitoring the controller local area network message at the i^{th} moment, the second clock information message is acquired according to the clock information in the controller local area network message, and in response to the controller local area network message being not monitored at the i^{th} moment, the second clock information message is acquired according to the clock information in the historical controller local area network message and the second timing information of the system clock; the second clock information message is sent to a plurality of domain controllers to instruct the plurality of domain controllers to perform the time synchronization according to the clock information of the second clock information message.

To sum up, in some embodiments, when the central gateway does not monitor the first clock information message sent by the vehicle-mounted telematics device in the current time period, the clock information of the controller local area network message is used to acquire the second clock information message to perform time serving of the vehicle's domain controllers, and after receiving the first clock information message, it performs time serving for vehicle's domain controllers according to the first clock information message. At this time, if the subsequent TSN protocol stack fails, the vehicle-mounted telematics device stops sending the first clock information message. At this time, because there is a monitored historical clock information message in the current time period of the central gateway, even if the first clock information message is broken, the CAN bus message can be paused, and the system clock inside the central gateway can be used to continue timing based on the clock information of the historical clock information message to acquire the second clock information message for time serving.

According to embodiments of the present invention, when the TSN protocol stack fails, time jumps can be avoided, time synchronization among vehicle domain controllers can be ensured, and the efficiency and accuracy of time synchronization can be improved; meanwhile, other domain controllers have no extra workload and do not need extra software and hardware support.

Fig. 5 is a flow chart of a time synchronization method for a vehicle according to an embodiment of the present invention. As shown in Fig. 5, the time synchronization method is executed by a vehicle-mounted telematics device, and includes the following steps.

At S501, reference clock information sent by a global navigation satellite system is monitored.

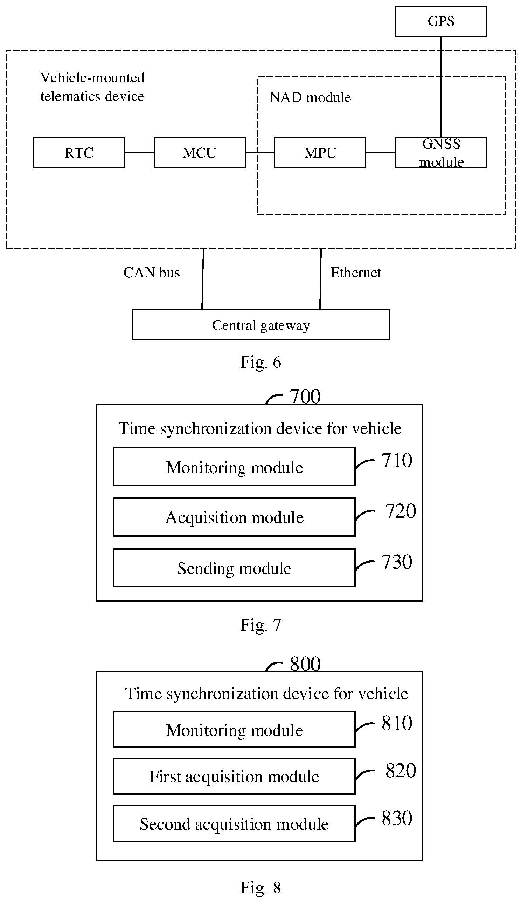

Fig. 6 is a structural diagram of a vehicle-mounted telematics device according to an embodiment of the present invention. As shown in Fig. 6, a vehicle-mounted telematics device (telematics module) includes: a navigation, audio and data (NAD) module, which consists of a microprocessor unit (MPU) and a global navigation satellite system (GNSS) module; a microcontroller unit (MCU); and a real-time clock RTC, which is mainly configured to provide a system timing function when the system sleeps.

The global positioning system (GPS) sends UTC time (UTC is the abbreviation of coordinated universal time, also called world standard time) to the GNSS module through an Antenna. The GNSS module synchronizes UTC time to MPU through 1PPS (1 pulse per second) hard wire, and MPU synchronizes UTC time to MCU through 1 PPS hard wire.

In embodiments of the present invention, UTC time is the reference clock information.

At S502, in response to the reference clock information being monitored, a clock information message and/or a controller local area network message are/is acquired based on the reference clock information, and the clock information message and/or the controller local area network message are/is sent to a central gateway.

After MCU synchronizes UTC time, UTC time is used to acquire controller local area network message and clock information message, and they are sent the central gateway, so as to realize the release of vehicle time.

In embodiments of the present invention, the vehicle-mounted telematics device sends the controller local area network message to the central gateway based on the controller local area network, and the vehicle-mounted telematics device sends a first clock information message to the central gateway based on Ethernet. Optionally, the transmission period may be 100ms.

At S503, in response to the reference clock information being not monitored, real-time clock information is acquired, and the controller local area network message is acquired according to the real-time clock information and sent to the central gateway.

In some embodiments, GNSS may be unavailable (not ready) after the vehicle is powered on, that is, when the reference clock information is not monitored, the timer master of MCU uses the real-time clock information, that is, the RTC time to acquire the controller local area network message and send it to the central gateway, so as to realize the release of the vehicle time based on CAN bus.

In embodiments of the present invention, the clock information message and/or the controller local area network message are acquired and sent to the central gateway, so that the central gateway can be used as the vehicle backup time release source to redundantly broadcast the vehicle time, and the time synchronization among the vehicle domain controllers can be ensured under the condition that the TSN protocol stack fails, avoiding time jumps and improving the accuracy of the time synchronization.

Fig. 7 is a structural block diagram of a time synchronization device for a vehicle according to an embodiment of the present invention. As shown in Fig. 7, based on the same application concept, embodiments of the present invention also provide a time synchronization device 700 for a vehicle. The time synchronization device 700 includes a monitoring module 710 configured to continuously monitoring a controller local area network message and a first clock information message both sent by a vehicle-mounted telematics device and both having clock information, in a same time period; an acquisition module 720 configured to acquire a second clock information message at a current moment according to the monitored first clock information message or the monitored controller local area network message; a sending module 730 configured to send the second clock information message to a plurality of domain controllers to instruct the plurality of domain controllers to perform a time synchronization according to clock information of the second clock information message.

In some embodiments, the acquiring module 720 is further configured to in response to the first clock information message being monitored at the current moment, determine the first clock information message monitored at the current moment as the second clock information message; in response to the first clock information message being not monitored at the current moment, acquire the second clock information message according to a historical clock information message or the controller local area network message, in which the historical clock information message is a last frame of the first clock information message monitored at a historical moment in the current time period.

In some embodiments, the acquiring module 720 is further configured to judge whether the historical clock information message is monitored in the current time period; in response to the historical clock information message being monitored, acquire the second clock information message according to the historical clock information message and first timing information of a system clock, in which the first timing information of the system clock is timing information acquired by the system clock since the system clock started timing after monitoring the historical clock information message.

In some embodiments, the acquiring module 720 is further configured to in response to the historical clock information message being not monitored, judge whether the controller local area network message is monitored at the current moment; in response to the controller local area network message being monitored at the current moment, acquire the second clock information message according to the clock information in the controller local area network message.

In some embodiments, the acquiring module 720 is further configured to in response to the controller local area network message being not monitored at the current moment, acquire the second clock information message according to a historical controller local area network message and second timing information of the system clock. The historical controller local area network message is a last frame of the controller local area network message monitored at the historical moment in the current time period, and the second timing information is timing information acquired by the system clock since the system clock started timing after monitoring the historical controller local area network message.

In some embodiments, the monitoring module 710 is further configured to compare the clock information in the monitored first clock information message with a preset first time range, and filtering the first clock information message of which the clock information does not exist in the first time range; and/or the clock information in the monitored controller local area network message with a preset second time range, and filtering the controller local area network message of which the clock information does not exist in the second time range.

In some embodiments, the monitoring module 710 is further configured to in response to the first clock information message being monitored, judge whether the clock information in the first clock information message lacks a message type; and in response to the lack of the message type of the clock information in the first clock information message, filter the first clock information message.

In some embodiments, the controller local area network message is monitored based on a controller local area network; and/or the first clock information message is monitored based on Ethernet.

In embodiments of the present invention, the second clock information message at the current moment is acquired according to the monitored first clock information message or the controller local area network message, and the second clock information message is sent to a plurality of domain controllers, that is, the central gateway is used as the vehicle backup time release source to redundantly broadcast the vehicle time, which can ensure the time synchronization among the vehicle domain controllers in the case of a TSN protocol stack failure, avoid time jumps and improve the accuracy of time synchronization.

Fig. 8 is a structural block diagram of a time synchronization device for a vehicle according to an embodiment of the present invention. As shown in Fig. 8, based on the same application concept, embodiments of the present invention also provide a time synchronization device 800 for a vehicle. The time synchronization device 800 includes: a monitoring module 810 configured to monitor reference clock information sent by a global navigation satellite system; a first acquisition module 820 configured to in response to the reference clock information being monitored, acquire a clock information message and/or a controller local area network message based on the reference clock information, and send the clock information message and/or the controller local area network message to a central gateway; and a second acquisition module 830 configured to in response to the reference clock information being not monitored, acquire real-time clock information, and acquire the controller local area network message according to the real-time clock information and send the controller local area network message to the central gateway.

In some embodiments, the controller local area network message is sent to the central gateway based on a controller local area network; and/or the clock information message is sent to the central gateway based on Ethernet.

In embodiments of the present invention, the clock information message and/or the controller local area network message are acquired and sent to the central gateway, so that the central gateway can be used as the vehicle backup time release source to redundantly broadcast the vehicle time, and the time synchronization among the vehicle domain controllers can be ensured under the condition that the TSN protocol stack fails, avoiding time jumps and improving the accuracy of the time synchronization.

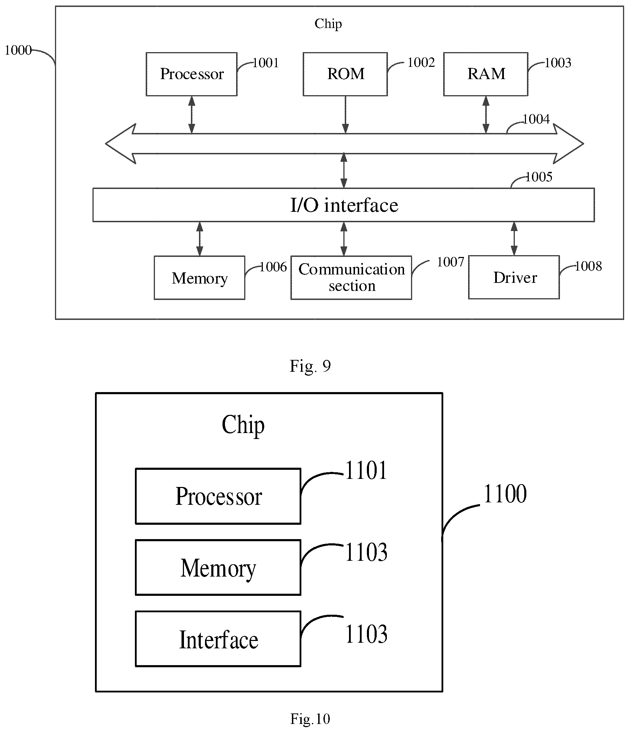

Fig. 9 is an architectural block diagram of a chip according to an embodiment of the present invention. The chip shown in Fig. 9 is merely an example, and should not limit the function and application scope of embodiments of the present invention.

As shown in Fig. 9, a chip 1000 includes a processor 1001, which can perform various appropriate actions and processes according to a program stored in a read only memory (ROM) 1002 or a program loaded from a memory 1006 into a random access memory (RAM) 1003. In the RAM 1003, various programs and data required for operations of an electronic apparatus are also stored. A processor 1001, a ROM 1002 and a RAM 1003 are connected to each other through a bus 1004. An input/output (I/O) interface 1005 is also connected to the bus 1004.

The following components are connected to the I/O interface 1005, which are a memory 1006 including a hard disk and the like; and a communication section 1007 including a network interface card such as a local area network (Local Area Network) card, a modem, etc., the communication section 1007 performs communication processing via a network such as the Internet; a driver 1008, which is also connected to the I/O interface 1005 as needed.

In particular, according to embodiments of the present invention, the process described above with reference to the flow chart can be implemented as a computer software program. For example, embodiments of the present invention include a computer program carried on a computer-readable medium, which contains program code for executing the method shown in the flow chart. In such an embodiment, the computer program can be downloaded and installed from the network through the communication section 1007. When the computer program is executed by the processor 1001, the above functions defined in methods of the present invention are performed.

In embodiments of the present invention, there is also provided a storage medium including instructions, such as a memory including instructions, which can be executed by the processor 1001 of the electronic apparatus to complete the above method. Optionally, the storage medium can be a non-transitory computer-readable storage medium, for example, the non-transitory computer-readable storage medium can be a read-only memory (ROM), a random access memory (RAM), a CD-ROM, a magnetic tape, a floppy disk, an optical data storage apparatus and the like.

In the present invention, a computer-readable storage medium can be any tangible medium containing or storing a program, which can be used by or in combination with an instruction execution system, device or apparatus. In the present invention, the computer-readable signal medium may include data signals propagated in baseband or as part of a carrier wave, in which computer-readable program codes are carried. This propagated data signal can be many forms, including but not limited to electromagnetic signals, optical signals or any suitable combination of the above. The computer-readable signal medium can also be any computer-readable medium other than the computer-readable storage medium, which can send, propagate or transmit the program for use by or in combination with the instruction execution system, device or apparatus. The program codes contained in the computer-readable medium can be transmitted by any suitable medium, including but not limited to: wireless, wire, optical cable, RF, etc., or any suitable combination of the above.

Fig. 10 is a structural block diagram of a chip according to an embodiment of the present invention. The structure of the chip shown in Fig. 10 is just an example, and should not bring any restrictions on the function and application scope of embodiments of the present invention. As shown in Fig. 10, the chip structure 1100 includes a processor 1101 and a memory 1102. The memory 1102 is configured to store program codes, and the processor 1101 is coupled to the memory 1102 and configured to read the program codes from the memory 1102 to realize the control methods in the above embodiments.

Optionally, there may be one or more processors 1101.

Optionally, the structure of the chip may further include an interface 1103, and there may be one or more interfaces 1103. The interface 1103 can be coupled to application programs and can receive data from external apparatuses such as sensors.

Other embodiments of the present invention will easily occur to those skilled in the art after considering the specification and practicing the present invention disclosed herein. The present invention is intended to cover any variation, use or adaptation of the present invention, which follows the general principles of the present invention and includes common sense or common technical means in the technical field not disclosed in the present invention. The specification and examples are to be regarded as illustrative only, with the true scope of the present invention indicated by the following claims.

It should be understood that the present invention is not limited to the precise structure described above and shown in the drawings, and various modifications and changes can be made without departing from its scope. The scope of the present invention is limited only by the appended claims.

## Claims

1. A time synchronization method for a vehicle, executed by a central gateway and comprising:
continuously monitoring (S101, S301) a controller local area network message and a first clock information message both sent by a vehicle-mounted telematics device and both having clock information, in a same time period;
acquiring (S102) a second clock information message at a current moment according to the monitored first clock information message or the monitored controller local area network message; and
sending (S103, S3 04) the second clock information message to a plurality of domain controllers to instruct the plurality of domain controllers to perform a time synchronization according to clock information of the second clock information message.

2. The time synchronization method according to claim 1, wherein acquiring (S102) the second clock information message at the current moment according to the monitored first clock information message or the monitored controller local area network message comprises:
in response to the first clock information message being monitored at the current moment, determining (S302) the first clock information message monitored at the current moment as the second clock information message;
in response to the first clock information message being not monitored at the current moment, acquiring (S303) the second clock information message according to a historical clock information message or the controller local area network message, wherein the historical clock information message is a last frame of the first clock information message monitored at a historical moment in the same time period.

3. The time synchronization method according to claim 2, wherein acquiring (S303) the second clock information message according to the historical clock information message or the controller local area network message comprises:
judging whether the historical clock information message is monitored in the same time period; and
in response to the historical clock information message being monitored, acquiring the second clock information message according to the historical clock information message and first timing information of a system clock, wherein the first timing information of the system clock is timing information acquired by the system clock since the system clock started timing after monitoring the historical clock information message.

4. The time synchronization method according to claim 3, further comprising:
in response to the historical clock information message being not monitored, judging whether the controller local area network message is monitored at the current moment;
in response to the controller local area network message being monitored at the current moment, acquiring the second clock information message according to the clock information in the controller local area network message.

5. The time synchronization method according to claim 4, further comprising:
in response to the controller local area network message being not monitored at the current moment, acquiring the second clock information message according to a historical controller local area network message and second timing information of the system clock;
wherein the historical controller local area network message is a last frame of the controller local area network message monitored at the historical moment in the same time period, and the second timing information is timing information acquired by the system clock since the system clock started timing after monitoring the historical controller local area network message.

6. The time synchronization method according to any one of claims 1-5, wherein, after continuously monitoring (S101, S301) the controller local area network message and the first clock information message both sent by the vehicle-mounted telematics device and both having the clock information, the method further comprises:
comparing the clock information in the monitored first clock information message with a preset first time range, and filtering the first clock information message of which the clock information does not exist in the first time range; and/or
comparing the clock information in the monitored controller local area network message with a preset second time range, and filtering the controller local area network message of which the clock information does not exist in the second time range.

7. The time synchronization method according to any one of claims 1-5, wherein, after continuously monitoring (S101, S301) the controller local area network message and the first clock information message both sent by the vehicle-mounted telematics device and both having the clock information, the method further comprises:
in response to the first clock information message being monitored, judging whether the clock information in the first clock information message lacks a message type; and
in response to the lack of the message type of the clock information in the first clock information message, filtering the first clock information message.

8. The time synchronization method according to any one of claims 1-5, further comprising:
monitoring the controller local area network message based on a controller local area network; and/or
monitoring the first clock information message based on Ethernet.

9. The time synchronization method according to any one of claims 1-5, wherein:
the time period is an ignition period; or
the time period is a time period in which the entire vehicle is incompletely fed with power; or
the time period is a time period in which the entire vehicle is incompletely powered off.

10. A time synchronization method for a vehicle, executed by a vehicle-mounted telematics device and comprising:
monitoring reference clock information sent by a global navigation satellite system (S501);
in response to the reference clock information being monitored, acquiring a clock information message and/or a controller local area network message based on the reference clock information, and sending the clock information message and/or the controller local area network message to a central gateway (S502);
in response to the reference clock information being not monitored, acquiring real-time clock information, and acquiring the controller local area network message according to the real-time clock information and sending the controller local area network message to the central gateway (S503).

11. The time synchronization method according to claim 10, further comprising:
sending the controller local area network message to the central gateway based on a controller local area network; and/or
sending the clock information message to the central gateway based on Ethernet.

12. A time synchronization device (700) for a vehicle, comprising:
a monitoring module (710) configured to continuously monitor a controller local area network message and a first clock information message both sent by a vehicle-mounted telematics device and both having clock information, in a same time period;
an acquisition module (720) configured to acquire a second clock information message at a current moment according to the monitored first clock information message or the monitored controller local area network message; and
a sending module (730) configured to send the second clock information message to a plurality of domain controllers to instruct the plurality of domain controllers to perform a time synchronization according to clock information of the second clock information message.

13. A time synchronization device (800) for a vehicle, comprising:
a monitoring module (810) configured to monitor reference clock information sent by a global navigation satellite system;
a first acquisition module (820) configured to acquire a clock information message and/or a controller local area network message based on the reference clock information in response to the reference clock information being monitored, and send the clock information message and/or the controller local area network message to a central gateway; and
a second acquisition module (830) configured to acquire real-time clock information in response to the reference clock information being not monitored, and acquire the controller local area network message according to the real-time clock information and send the controller local area network message to the central gateway.

14. A chip (1000), comprising:
a memory (1006) configured to store a program code;
a processor (1001) coupled to the memory (1006) and configured to read the program code from the memory (1006) to perform the time synchronization method according to any one of claims 1-9 or the time synchronization method according to any one of claims 10-11.

15. A non-transitory computer-readable storage medium having stored therein instructions that, when executed by a processor of an electronic apparatus, causes the electronic apparatus to perform the time synchronization method according to any one of claims 1-9 or the time synchronization method according to any one of claims 10-11.
